Europäisches Patentamt

European Patent Office

Office européen des brevets

(11) Publication number: 0 254 513
A2

# (12) EUROPEAN PATENT APPLICATION

(21) Application number: 87306396.0

(51) Int. Cl.4: B60T 8/42

(22) Date of filing: 20.07.87

(30) Priority: 22.07.86 NZ 216937

(43) Date of publication of application:
27.01.88 Bulletin 88/04

(84) Designated Contracting States:
AT BE CH DE ES FR GB GR IT LI LU NL SE

(71) Applicant: DFC NEW ZEALAND LIMITED
350 Queen Street
Auckland(NZ)

(72) Inventor: Wondergem, Anthony Leonardus
17 James Tyler Crescent
Waikowhai Auckland(NZ)
Inventor: Lush, Andrew Douglas
12 Scherff Road
Remuera Auckland(NZ)

(74) Representative: Dearing-Lambert, Peter
Richard
Dearing-Lambert & Co. 109 High Street
Ibstock Leicestershire LE6 1LJ(GB)

(54) Accumulator for a braking system.

(57) A spring accumulator (56) is used in conjunction with a modulation valve (30) to provide an operating mechanism for an hydraulic anti-skid braking system. The modulation valve includes shut-off valve means (44) to close off communication between an hydraulic pressure source (40) e.g. a master cylinder operated by the driver's foot, and a brake operating mechanism e.g. a wheel cylinder, and a modulation chamber (32) having a modulation plunger (35) which can move to vary the available chamber (32) volume and hence vary the hydraulic pressure in the chamber when the shut-off valve (44) is closed. The modulation plunger is connected to the spring accumulator (56) by a right-angle lever arrangement (63-61-64). The spring accumulator includes a movable plate (56) which is indexed by a pilot plunger (53) under the control of hydraulic pressure associated with the modulation valve (30). Work done by the outward displacement of the modulation plunger (35) can be stored as potential energy in the spring (59) of the accumulator and re-used to assist the return of the modulation plunger (35) to its resting state. The return movement of the modulation plunger is controlled by a small vacuum operated piston and cylinder (70) which can be of relatively low power as the spring accumulator (56) provides most of the energy required to balance the hydraulic pressure acting on the plunger. The right angle lever arrangement (63-61-64) and movement of the accumulator plate (56) allows the spring (59) to be locked in its compressed state (with the modulation chamber at low pressure) until activation of the spring is required to assist in returning the plunger to a higher pressure position.

FIG. 3

## "ACCUMULATOR FOR A BRAKING SYSTEM"

This invention relates to pressure regulators for anti-skid braking systems (ABS), and has particular application to an accumulator for use with such a pressure regulator.

## BACKGROUND

In the past, various attempts have been made to provide a regulating mechanism for the hydraulic pressure of a vehicular brake mechanism. The purpose is to decrease the pressure on a hydraulic brake when a sensor detects that the wheel locks up and thus risks skidding on the road surface.

Such attempts have generally been made by providing means for pumping fluid away from the operating or slave cylinder of the brake on the locked wheel. These prior art mechanisms have generally been rather bulky, involving the use of a large electric pump to pump hydraulic fluid around the system. They have been used on large passenger vehicles, but are not suited to smaller cars or motorcycles where weight or size is at a premium. Moreover, the use of an electric pump adds to the cost of the system.

Attempts have also been made to modulate the hydraulic brake pressure by varying the volume of a modulation chamber e.g. by moving a piston or the like to increase the chamber volume and hence decrease the applied pressure. However a considerable force has to be applied to the piston in order to restore it to its original high pressure position. This also increases the size weight and cost of the components required to operate the anti-skid braking system.

Examples of prior art anti-locking braking systems include:

| inventor: (applicant) | country: | patent document number: |
|---|---|---|
| Lester et al | US | 3,544,171 |
| Skoyles | US | 3,724,914 |
| Gfeller | US | 3,752,268 |
| Baynes et al | US | 4,046,427 |
| Pieren et al | US | 3,466,098 |
| Ando et al | US | 4,095,851 |
| Wolf | DE | 2,316,786 |
| Hager | DE | 3133283 A1 |
| Kovar et al | DE | 2812390 A1 |
| Ostwald | FR | 2551007 A1 |
| (Robert Bosch GMBH) | FR | 2358299 |
| (Blomberg et al) | FR | 2301418 |
| (Aisin Seiki KK) | GB | 1,377,916 |
| Wondergem | EP | 0 200 331 A1 |

## OBJECT

It is an object of this invention to provide an improved pressure regulator for an hydraulic braking system or one which will at least provide brake manufacturers with a useful choice.

## SUMMARY OF THE INVENTION

In a first aspect the invention provides pressure regulating means for an hydraulic braking system including: valve means to close off communication between a pressure source (e.g. a master cylinder operated by the driver's foot) and a brake operating mechanism (e.g. a wheel cylinder), pressure modulation means between said valve means and said brake operating mechanism, and wherein said pressure modulation means is connected to accumulator means for storing potential energy from the operation of the modulation means, whereby in use the potential energy stored in said accumulator means may be used to assist the operation of the modulation means to control the hydraulic pressure in the system between said valve means and the brake operating mechanism.

Preferably the modulation means includes a modulation chamber having a movable modulation plunger capable of moving to vary the volume of said chamber, with said modulation plunger connected to the accumulator means.

Preferably said accumulator means includes a spring adapted to store energy from said modulation chamber and to assist in restoring the modulation plunger to its resting state (i.e. the low volume high pressure position). It is further preferred that the spring is mounted on a rotatably mounted accumulator member and that the rotation of this accumulator member can be controlled by a pilot plunger. It is also preferred that there is a rotatable cam plate (providing a right-angle lever arrangement) between the modulation plunger and said accumulator member. This allows: (a) the plunger to be locked in a high pressure position when the spring is relaxed, and (b) conversely allows the spring accumulator to be locked in the "compressed" position when the plunger is in a low pressure position.

Movement of the cam plate is preferably controlled by appropriate control means which for example can include a small solenoid or small electric motor or a vacuum operated piston and cylinder. The control means can be relatively small as it does not need to overcome the pressure within the modulation chamber which is balanced by the operation of the spring accumulator.

In a further aspect, the invention provides a hydraulic brake apparatus including at least one hydraulic actuating means, the or each hydraulic actuating means being arranged to apply a brake to a moving object, a sensor at or adjacent the or each moving object and adapted to detect locking of the moving object, a hydraulic pressure generator adapted to supply hydraulic fluid under pressure to the or each said hydraulic actuating means to apply its respective brake, and regulating means located between said hydraulic pressure generator and the or each hydraulic actuating means; the regulating means including a valve adapted to shut off communication between said pressure generator and said hydraulic actuating means, and valve operating means arranged to close the valve upon activation of the sensor, and a modulation chamber between said valve and the or each hydraulic actuating means, the modulation chamber having a movable member capable of moving to vary the volume of said chamber and connected to an accumulator means; whereby expansion of said modulation will cause energy to be stored in said accumulator means.

the accumulator of this invention may be used with a pressure regulator of the type described in our European Patent Application 0 200 331 (A1) entitled "Pressure Regulator", although it is also applicable to other types of modulation valves.

## DRAWINGS

The above gives a broad description of the present invention, preferred forms of which will now be described by way of example with reference to the accompanying drawings in which:

Figure 1: illustrates schematically the arrangement of parts of a first embodiment of the invention in the normal deactivated position.

Figure 2 : illustrates schematically the arrangement of the same parts at a point in time where braking pressure has been applied, and the wheel is temporarily being released to prevent skidding.

Figure 3 : shows a schematic view of a second embodiment of the invention in which an accumulator is applied to a pressure regulator of the type shown in our European Patent Application 0200331 with its valves open.

Figure 4: shows schematic views of the movement of the accumulator and the right-angle lever arrangement of the roller cam plate.

Figure 5: shows a schematic view of the second embodiment of the invention in which the valves of the pressure regulator are closed.

Figure 6: shows a cross sectional view through the cam rod portion 37 of plunger 35 in association with valves 44 and 45.

Figure 7: shows a schematic view of a portion of the modulation plunger of Figure 3, in association with a mechanism designed to rotate the modulation plunger during rotation of the roller cam plate.

## FIRST EMBODIMENT

This pressure regulator has a modulation valve 1 containing a solenoid coil 1a which operates an annular ferromagnetic sleeve 1b which is integral with a modulation plunger 2 and a modulation platen 3. This platen is contacted by a roller cam plate 4 having rollers 17, 18. The roller cam plate provides a right-angle lever arrangement, there being a right-angle between the notional lines connecting the pivot point 14 of the roller cam plate to the axes of rotation of rollers 17,18. The roller cam plate can be held in place by a solenoid operated lock 5, whilst a rotatable accumulator plate 7 can be held in place by a solenoid operated lock 6.

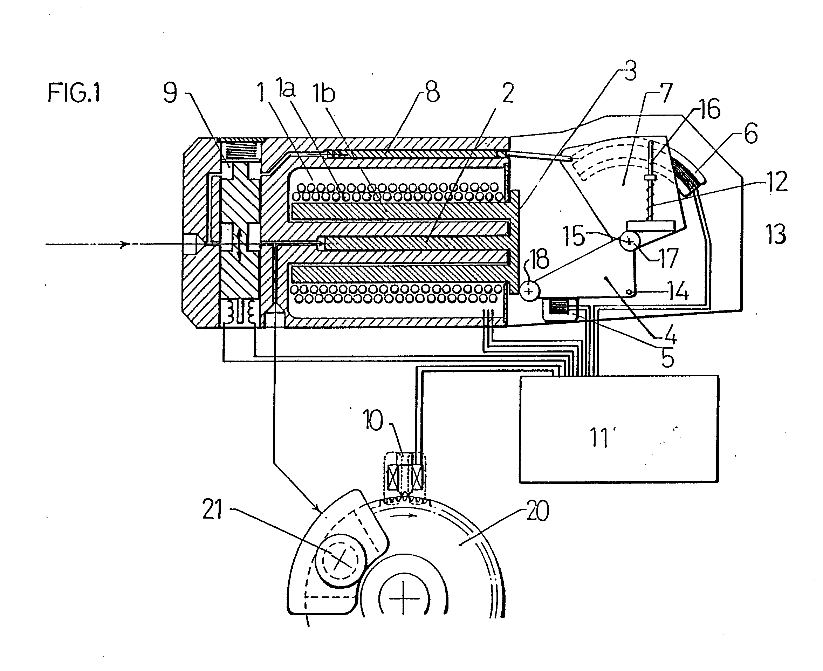

The accumulator plate rotates about a pivot point 15 which coincides with the axis of rotation of roller 17 when in the resting position shown in Figure 1. The accumulator plate contains an accumulator spring 12 mounted on a spring guide 16 and capable of being compressed by movement of accumulator platen 13. The accumulator plate can be rotated in an anti-clockwise position by a coil spring (not shown) about its pivot point, and can be rotated in a clockwise direction by action of a pilot plunger 8 which moves within a pilot cylinder fed with hydraulic fluid via a shut-off spool valve 9 which also controls the supply of fluid to the modulation plunger 2.

The modulation valve is situated between a master cylinder (not shown) and a wheel cylinder 21 operated on a disc brake 20. Rotation of the disc and hence the wheel is monitored by a wheel sensor 10 which sends a signal to an electronic control unit 11 which in turn controls the operation of the modulation valve and the accumulator.

## OPERATION OF THE FIRST EMBODIMENT

In the normal de-activated position the valve will be as shown in Figure 1. The spring accumulator 7 will be rotated so that its spring guide 16 is at 90° to the axis of displacement of the modulation plunger 2 so that the plunger is parallel to a line between the axis of rotation of its contacting roller 18 and pivot point 14 (the first "straight-line" position) whilst the spring guide 16 is parallel to a line between the axis of rotation of roller 17 and pivot point 14 (the second "straight-line" position). The modulation plunger 2 will be in its minimum displacement position, that is fully home towards the left side of Figure 1.

When pedal pressure is applied to the system in the normal braking mode, this pressure will cause the hydraulic pilot control plunger 8 to rotate the spring accumulator against the return spring (not shown) wound concentric with the spring accumulator's pivot axis 15. The angle of rotation will be proportional to the applied fluid pressure.

The shut-off solenoid valve 9, as shown in Figure 1, is spring biased to its open position, so that brake fluid will pressurise the wheel cylinder 21 and the chamber where the modulation plunger 2 is housed. This would normally cause the plunger to travel to the end of its stroke, rotating the roller cam plate 4 to its maximum displacement position. However it can be restrained from doing this by a lock 5 that would act on the roller cam plate and prevent its rotation. Locks 5 and 6 are preferably solenoid operated locks capable of preventing rotation of the roller cam plate and spring accumulator respectively.

If during braking the brake force co-efficient exceeds the road surface co-efficient, the resulting tendency to skid will be detected by the rotational wheel sensor 10. The sensor would input its information to a central electronic control unit 11 which would activate the anti-skid function mode as follows.

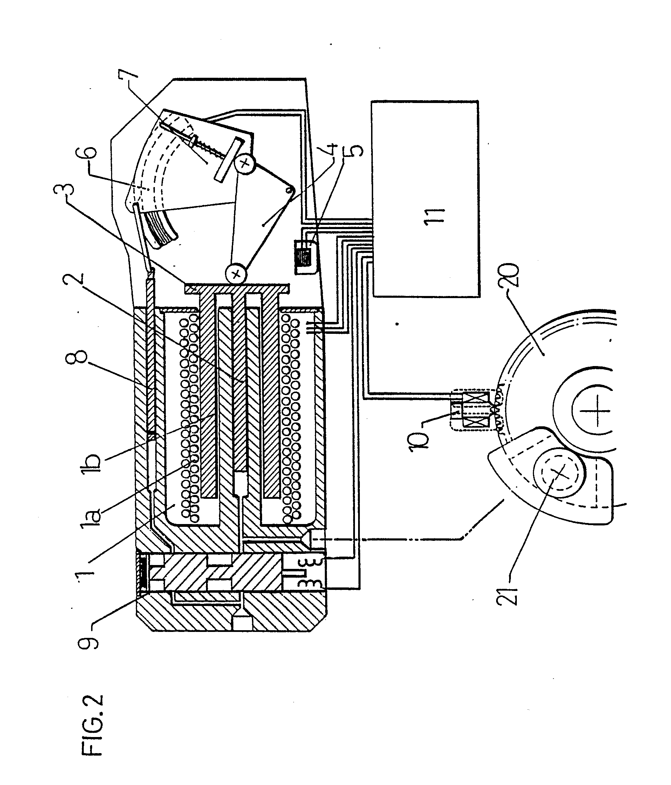

On receipt of the skid information the control unit would command the shut-off valve 9 to cut off fluid communication between the master cylinder (not shown) on the one hand and the modulation valve 1 and wheel cylinder 21 on the other hand. This isolates the wheel cylinder pressure from the driver pedal input and halts the rotation of the spring accumulator 7 at a position proportional to the master cylinder pressure (see Figure 2). An optional spring accumulator lock 6 could then be activated to hold the spring accumulator 7 in this position. At low pressures the spring accumulator would be held in place by the valve 9 closing off communication to the pilot plunger 8 but it is preferred that a lock 6 is provided for this purpose.

The control unit then commands the modulation valve 1 to reduce the wheel cylinder pressure by increasing the displacement of the modulation chamber. This will allow the wheel to begin rotating and thus restore directional control of the vehicle. To do this the plunger must travel towards the right of Figure 2, under the control of the modulation solenoid 1. The roller cam plate lock 5 must be released at this stage to allow the plunger 2 to modulate. The solenoid operated lock 5 is preferably used to push the roller cam plate out of the locked "straight-line" position of Figure 1 so that action of the modulation solenoid and pressure within the modulation chamber would rotate the roller cam plate and compress the accumulator spring 12, thus balancing the force developed by the brake fluid pressure on the modulation plunger.

When the wheel sensor and control unit have determined that the wheel is now rotating at approximately the correct velocity, the modulation solenoid is energised to move the modulation plunger to the left to increase the wheel cylinder pressure. The roller cam plate, which can be mechanically connected to the plunger platen 3 preferably by a roller race running captive in an 'L' type slot), will de-rotate under the influence of the accumulator spring 12, thus ensuring the basic force balance of the system.

The modulation valve will continue to control the wheel pressure in this fashion until the master cylinder pressure is decreased (when the valve 9 can be re-opened), or the vehicle comes to a halt.

When the brake master cylinder pressure is released the plunger is restored to its original or rest position (minimum volume), the roller cam plate lock activated, the spring accumulator lock released, and then the shut-off valve opened to allow the system fluid pressure to be released, allowing the components to return to the position shown in Figure 1.

SECOND EMBODIMENT

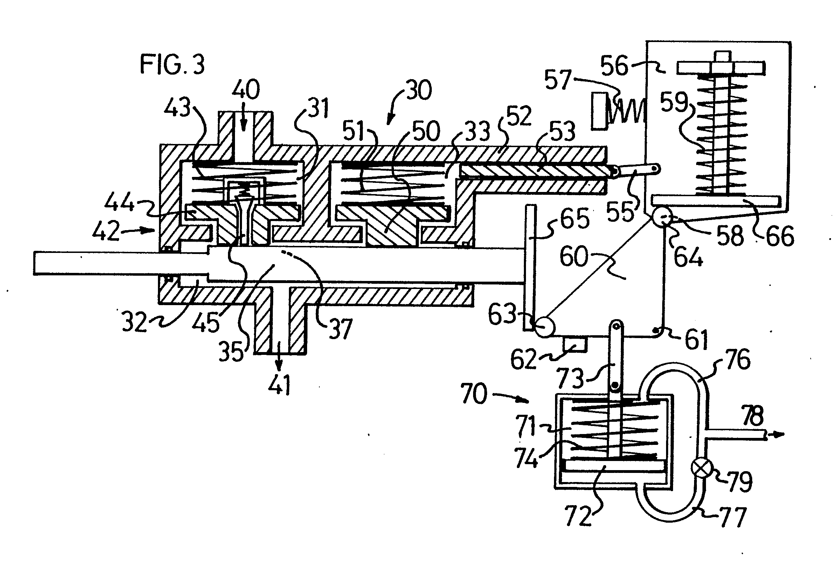

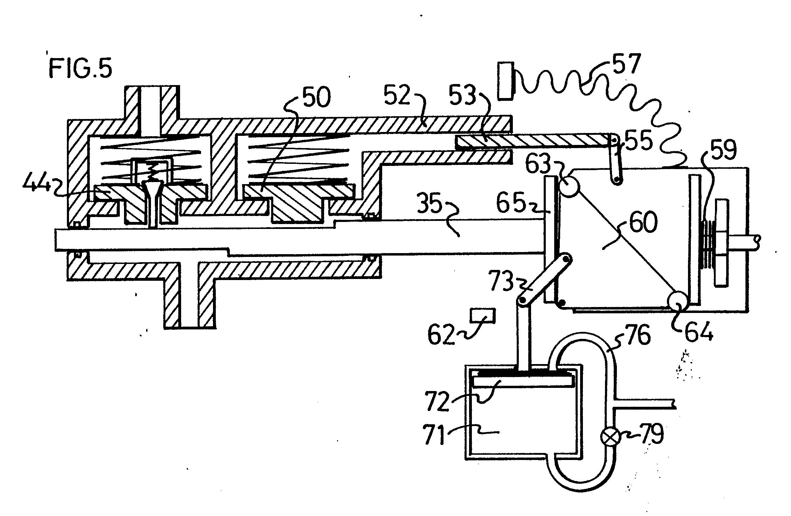

Figures 3 and 5 shows a pressure regulator of the type described in our earlier European patent application 0200331, in combination with a spring accumulator.

The pressure regulator 30 has an inlet chamber 31, a modulation chamber 32, and in addition has a pilot chamber 33.

A stepped cam rod 35 can move in or out of the modulation chamber 32 so that the available chamber volume can be varied, and hence the pressure within the chamber can be varied if the modulation chamber 32 is closed off from the source of fluid pressure 40, i.e. a brake line from the master cylinder (not shown).

The pressure regulator 30 is connected in line between the source of fluid pressure 40, and a brake operating mechanism, i.e. a wheel cylinder (e.g. 10 of Figure 1) of a disc brake or the like, by means of outlet port 41.

A shut-off valve 42 is provided between the inlet chamber 31 and the modulation chamber 32. This valve is biased into its closed position (Figure 5) by means of a spring 43 so that valve member 44 seats against the wall of the inlet chamber 31. The valve 42 also contains a needle valve 45, which is in turn biased into the closed position by a smaller spring. The needle valve is slightly longer than the main valve body, so that the needle 45 may make initial contact with the cam rod plunger 35 and thus open just before valve 44. The cam rod plunger 35 has a cam section 37 adjacent the valve 44, and this cam section extends far enough in order to be contacted by a pilot valve (discussed below).

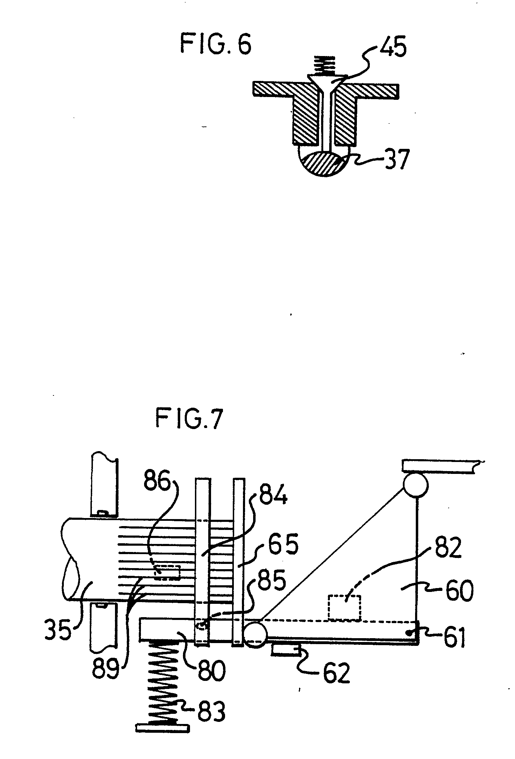

Figure 6 shown the cam section 37 to be of substantially oval configuration so that rotation of the cam rod will cause firstly the needle valve 45 to open, and on further rotation will allow the main valve 44 (and also the pilot valve) to open. Whilst valves 44,45 are shown in the open position in Figure 3.

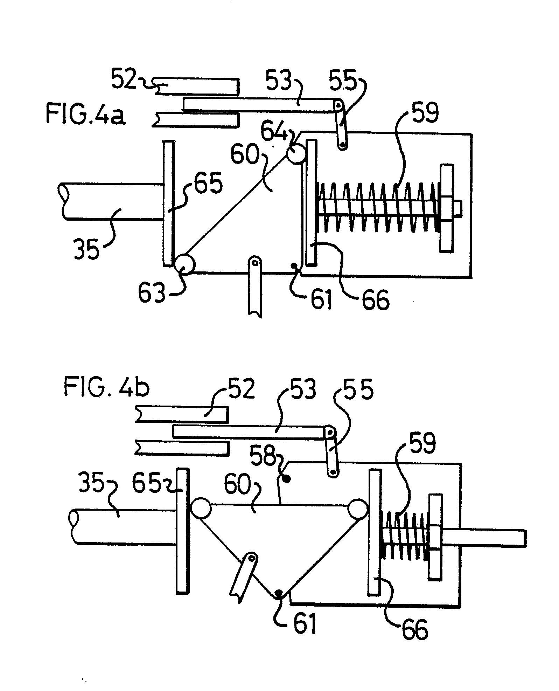

In the positions shown in Figure 4A, 4B, and 5, both needle valve 45 and the main shut-off valve 44 are closed, so that fluid communication between the inlet chamber 31 and the modulation chamber 32 is prevented.

In these positions, movement of the plunger 35 out of the chamber, ie towards the right, will increase the available volume within the modulation chamber 32, and thus cause the hydraulic pressure applied to the wheel cylinder to decrease, thereby releasing the disc brake. Conversely, with the valves 44, 45 closed, if the plunger 35 moves to the left, ie the larger diameter portion moving back into the modulation chamber 32, the available fluid volume within the chamber will decrease, and hence the pressure applied to the wheel cylinder will increase thereby causing the brake to be applied to the wheel.

A pilot valve 50 is provided within pilot chamber 33, so as to shut off communication between the modulation chamber 32 and the pilot chamber 33. This valve is a shut off valve and is biased towards the closed position (as shown in Figure 5) by a sping 51. This valve 50 can also be activated by rotation of the cam portion 37 of the plunger 35, and it will be appreciated that this pilot chamber 33 may be provided in

5

close proximity to the inlet chamber 31, ie it may be radially disposed with respect to the inlet chamber 31 (so as to reduce the length of the modulation chamber 32) but it will be appreciated that the schematic illustration of Figures 3 and 5 is easier to explain by showing the inlet chamber 31 and the pilot chamber 33 side by side.

Extending from the pilot chamber 33, there is a pilot cylinder 52, in which a pilot plunger 53 can move. This plunger 53 is connected to a linkage 55 by means of appropriate pivotal connections. The linkage 55 is in turn connected to an accumulator plate 56. The accumulator plate 56 operates in a similar fashion to that described with reference to Figures 1 and 2. It is biased towards a rest position by means of a return spring 57 which tends to pull the plate 56 in a counter clockwise direction relative to its pivot point 58. The position of this pilot plunger 53 can thus be held in balance between the pressure within chamber 33, and the force applied by the return spring 57.

The accumulator plate 56 is connected to the modulation plunger 35 by means of a roller cam plate 60. This roller cam plate pivots about axis 61, and in its fully counter clockwise position engages a stop 62, so that it is positioned in an "straight-line" position to resist outward displacement of the plunger 35. The roller cam plate 60, has rollers 63, 64 which contact a platen 65 on the plunger 35, and a platen 66 on the spring accumulator. The platen 66 and its spring guide can move to compress the accumulator spring 59.

The roller cam plate is controlled by control means 70, in the form of a vacuum operated ram. This ram has a cylinder 71 containing a movable piston 72, and connected by a piston rod 73 to the roller cam plate. The piston 72 is biased into the rest position (as shown in Figure 3) by means of a return spring 74.

Vacuum lines 76, 77 are connected to either end of the cylinder 71, and are in turn connected to a vacuum source 78 (not shown). A control valve 79 is positioned on the vacuum line 77, and is adapted to quickly close off the vacuum connection between the source 78 and line 77, and at the same time to allow air to enter line 77, thereby applying atmospheric pressure to the underside of piston 72 in order to move the piston upwardly, and thus move the roller cam plate in the clockwise direction.

Figure 7 shows a modification to the roller cam plate, enabling movement of the roller cam plate 60 to also control rotation of the cam rod plunger 35. It will be appreciated that it is desirable to control the rotation of the cam rod plunger by movement of the roller cam plate, although it is possible to provide some alternative mechanism by which the cam rod plunger 35 can be rotated to open or close the valves.

The additional components as shown in Figure 7, are superimposed on the roller cam plate 60. This roller cam plate operates in the same fashion as that of Figures 3 and 5 (to be described below) and has an additional lever arm 80 pivotally mounted on the underside of the roller cam plate 60, about the pivot axis 61. This lever arm 80 can move between the main counter-clockwise limit stop 62, a limit stop 82 on the underside of the roller cam plate, and a clockwise limit stop 86.

The lever arm 80 is biased in the clockwise direction by means of a spring 83, with spring 83 pushing on the lever arm (it being appreciated that this spring 83 is shown as a compression spring for ease of explanation, although many other types of spring could be used). A collar 84 is provided through which the plunger 35 slides and is connected to the lever arm 80 by means of a pin 85. The plunger 35 has splines 89 so that rotation of the collar will rotate the plunger 35. Motion of the lever arm in a clockwise direction (as the roller plate and its associated stop 82 rotates clockwise and the lever arm under the influence of spring 83 follows the stop 82 until it contacts stop 86) will cause the collar 84 to rotate slightly in a counter clockwise direction (when viewed from point 61 looking towards the platen 65). Conversely, motion of the lever arm 80 in the counter clockwise direction (as the roller plate rotates counter-clockwise and stop 82 pushes on the lever arm) will cause the collar and hence the plunger to rotate in the clockwise direction (when viewed from the right of Figure 5).

OPERATION OF SECOND EMBODIMENT

In the normal de-activated position of Figure 3 the pressure regulator 30 will have valves 44, 45 and 50 open, so that pressure applied from the master cylinder 40, will be transmitted to the inlet chamber, modulation chamber and pilot chamber, as well as to the wheel cylinder via outlet 41. Normally the plunger 37 would be in its minimum displacement position within chamber 32, ie with the bulk of the large diameter portion 35 within the chamber.

As brake pressure is applied via the master cylinder, when a brake pedal is depressed (or in the case of a motorcycle a hand brake is operated), pressure will be applied initially via the inlet chamber 31, through the modulation chamber 32 via the outlet 41 to the wheel cylinder, and also to the pilot chamber to push the pilot plunger 53 towards the right. As the pressure increases within the modulation chamber 32 the plunger 35 will be pushed outwardly, ie towards the right of Figure 3 but is prevented from doing so by the roller cam plate 60 which is held in the "straight-line" locking position by means of the return spring 74 holding the piston 72 downwardly within its cylinder. The high pressure applied in chamber 32 will pass into the pilot chamber 33 and thus push the pilot plunger 53 to the right, against the action of the return spring (as shown in Figure 4a) thereby pushing the spring accumulator 56 clockwise into a position ready to receive the roller cam plate 60 when that is rotated in a clockwise direction against the platen 66 of the spring accumulator 56.

When a wheel sensor 10 (Figure 1) detects that the wheel has a tendency to lock-up, a signal from the electronic control unit 11 (Figure 1) can be used to control rotation of the cam rod plunger 35 and hence close off the valves 44, 45, and 50, to thereby isolate the modulation chamber 32 from the source of fluid pressure 40. At the same time, the electronic control unit can be used to release the roller cam plate by operating valve 79 to close off vacuum in line 77, and admit air to the underside of piston 72 thereby pushing the roller cam plate out of its "straight-line" position allowing the pressure within modulation chamber 32 to push the plunger 35 to the right which in turn rotates the roller cam plate 60 clockwise as its roller 63 rolls along the platen 65, and at the same its roller 64 moves against platen 66 to thereby store potential energy in spring 59.

Figure 3 shows the resting state before the brakes are applied. Figure 4A shows the accumulator indexed into its maximum position (i.e. maximum brake line pressure has been applied) the valves 44,45 and 50 have closed, and the roller cam plate is starting to rotate clockwise. Figure 4B also shows the accumulator indexed into its maximum position (i.e. maximum brake line pressure has been applied) the valves 44,45 and 50 are still closed, and the roller cam plate is half-way through its clockwise rotation towards the fully modulated position of Figure 5.

The right-angle lever arrangement of the roller cam plate will allow the roller cam plate to be pushed into an extended position in which the axis of spring 59 is in-line with axis of roller 64 and the pivot point 61 (the second "straight-line" position an example of which is shown in Figure 5) and so be held in this position even though the modulation plunger has moved to a low pressure position.

The setting of the accumulator plate and hence the extent of travel of the modulation plunger is determined by the brake line pressure trapped within the modulation valve when shut-off valve 44 is closed. This right-angle lever arrangement allows the spring to balance the pressure within the modulation chamber and allows the plunger to be locked in a high pressure position when the spring 59 is relaxed as shown in Figure 3, and conversely allows the spring 59 to be locked in the "compressed" position when the plunger is in a low pressure position as shown in Figure 5. Note that the position shown in Figure 5 is that of modulation of the maximum brake line pressure whereas a lesser brake line pressure trapped within the modulation chamber would be fully modulated with the accumulator in an intermediate position similar to that shown in Figure 2 (which is also in the second straight-line position).

To return the modulation plunger to the left, in order to increase pressure to the wheel cylinder, the valve 79 is switched on the bottom half of the vacuum loop, so that vacuum is now drawn on the bottom of the vacuum cylinder allowing the spring 74 within the vacuum cylinder to push the piston towards the bottom, thereby allowing the accumulator cam plate to return towards the position shown in Figure 3.

Thus with the valves 44, 45 in the closed position, the movement of the modulation plunger 35 back and forth within modulation chamber 32 will cause the pressure applied to the wheel cylinder to be modulated, under the control of the sensor and electronic control unit, so that the required amount of braking can be applied without the wheel locking-up, and thus skidding. The control of this modulation plunger, and the forces required to move it back against the pressure within chamber 32, is controlled by the vacuum cylinder 70, in conjunction with the potential energy stored within the spring accumulator.

When the valve to the pilot chamber is open and the pressure within the pilot chamber drops, then the return spring 57 on the accumulator plate will cause the accumulator plate to return to the "upright position" as shown in Figure 3.

Figure 7 shows that initial motion of the roller cam plate can be used to rotate the cam rod plunger 35 and hence control the operation of the valves.

When the roller cam plate is initially moved from its first "straight-line" position and starts to rotate in a clockwise direction as shown in Figure 3, this will allow the lever arm 80 to follow the motion of the cam plate, as it is biased in a clockwise direction by compression spring 83 towards stop 82 on the underside of the cam plate 60. This clockwise motion of the lever arm causes the pin 85 to rotate the collar 84, and thus the cam rod plunger 35 is rotated in the anti-clockwise direction (as viewed from the right of Figure 5), and thus the valves 44, 45 and 50 can be moved into the closed position as shown in Figure 5. The lever arm 80 will continue to rotate in clockwise direction until it engages stop 86. At this point, the roller cam plate 60 can continue to move in the clockwise direction, leaving the lever arm 70 behind. It is preferred that the cam portion 37 of the plunger 35 is in the form of a quick acting cam, so that only a few degrees of rotation of the plunger 35, in either direction, will open or close the valves.

## ADVANTAGES

By using a spring accumulator to store potential energy from the movement of the modulation plunger as it is pushed out of the modulation chamber by the action of hydraulic pressure within the chamber, it is possible to reduce the energy require to restore the plunger to the high pressure position (ie back within the chamber), and thus a more compact unit may be provided. The controlled movement of the roller cam plate can be by means of a vacuum cylinder as described with reference to Figure 3, or by means of a small solenoid, or small electric motor, or the like.

## VARIATIONS

It will be appreciated that many other types of springs could be used to store energy in the accumulator, and that the pressure regulator and accumulator could be constructed in many different ways embodying the principles of this invention.

It should be noted that, as the description and the accompanying drawings represent examples only, any measurements, values or proportions given herein may be altered within the scope of this invention. Various other changes and modifications are possible without departing from the scope of this invention as broadly defined in the claims.

## Claims

1. Pressure regulating means for an hydraulic braking system including:
valve means to close off communication between a pressure source and a brake operating mechanism,
pressure modulation means between said valve means and said brake operating mechanism,
characterised in that said pressure modulation means is connected to accumulator means for storing potential energy from the operation of the modulation means,
whereby in use the potential energy stored in said accumulator means may be used to assist the operation of the modulation means to control the hydraulic pressure in the system between said valve means and said wheel operating means.

2. Pressure regulating means for an hydraulic braking system as claimed in the preceding claim, wherein said modulation means includes a modulation chamber having a movable modulation plunger capable of moving to vary the volume of said chamber and characterised in that said modulation plunger is connected to the accumulator means by a right-angle lever arrangement.

3. Pressure regulating means for an hydraulic braking system as claimed in the preceding claim, characterised in that said accumulator means includes a main spring adapted to store energy from said modulation chamber and to assist in restoring the modulation plunger to its resting state.

4. Pressure regulating means for an hydraulic braking system as claimed in the preceding claim, characterised in that the main spring is mounted on a rotatably mounted accumulator member.

5. Pressure regulating means for an hydraulic braking system as claimed in the preceding claim, characterised in that said accumulator plate is connected to a pilot plunger which can control rotation of said accumulator member.

6. Pressure regulating means for an hydraulic braking system as claimed in the preceding claim, characterised in that the right-angle lever arrangement includes a rotatable cam plate.

7. Pressure regulating means for an hydraulic braking system as claimed in the preceding claim, characterised in that rotation of said cam plate is activated by control means.

8. Pressure regulating means for an hydraulic braking system as claimed in the preceding claim, characterised in that said control means includes a vacuum operated piston and cylinder.

9. Pressure regulating means for an hydraulic braking system as claimed in claim 7, characterised in that said control means includes a solenoid.

10. An hydraulic brake apparatus including:

at least one hydraulic actuating means,

the or each hydraulic actuating means being arranged to apply a brake to a moving object,

a sensor at or adjacent the or each moving object and adapted to detect locking of the moving object,

an hydraulic pressure generator adapted to supply hydraulic fluid under pressure to the or each said hydraulic actuating means to apply its respective brake, and

regulating means located between said hydraulic pressure generator and the or each hydraulic actuating means, the regulating means including:

a valve adapted to shut off communication between said pressure generator and said hydraulic actuating means, and

valve operating means arranged to close the valve upon activation of the sensor, and

a modulation chamber between said valve and the or each hydraulic actuating means,

the modulation chamber having a movable member capable of moving to vary the volume of said chamber and connected to an accumulator means,

whereby expansion of said modulation chamber will cause energy to be stored in said accumulator means.

FIG.1

0 254 513

FIG. 2

0 254 513

FIG. 3

0 254 513

FIG.4a

FIG. 4b

FIG.5

0 254 513

FIG. 6

45

37

FIG.7

86
84
65
85
82
60
35
89
80
62
61
83